# EUROPÄISCHE PATENTSCHRIFT

(11) **EP 0 669 786 B1**
(45) Veröffentlichungstag und Bekanntmachung des Hinweises auf die Patenterteilung: **19.08.1998**
(21) Anmeldenummer: 95102205.2
(22) Anmeldetag: 17.02.1995
(51) Int. Cl.: H05B 37/02

(54) **Sicherheitsbeleuchtung**
Deterrent lighting
Eclairage de surveillance

(30) Priorität: 23.02.1994 DE 4405869
(43) Veröffentlichungstag der Anmeldung: 30.08.1995
(73) Patentinhaber: ABB PATENT GmbH, 68309 Mannheim (DE)
(72) Erfinder: Neumann, Wolfgang, D-57080 Siegen (DE)
(74) Vertreter: Rupprecht, Klaus, Dipl.-Ing.

(56) Entgegenhaltungen:
- EP-A- 0 510 751
- DE-A- 4 001 750
- US-A- 4 225 808

## Beschreibung

Die Erfindung betrifft eine Sicherheitsbeleuchtung mit einem Infrarot gesteuerten Bewegungsmelder, dessen Arbeitsstrom einen Beleuchtungsschaltkreis mit Leuchten speist.

Es ist bekannt, für die Überwachung von Räumen sogenannte Bewegungsmelder einzusetzen, die auf Infrarot-Strahlung ansprechen und hierbei ein Steuersignal zur Einschaltung eines entsprechenden Stromkreises abgeben. Rein schaltungstechnisch gesehen, weisen derartige Schaltungsanordnungen einen Infrarotsensor auf, der zur Einschaltung eines Stromkreises dient, sowie üblicherweise einen zeitgesteuerten Ausschalter, der nach Ablauf einer voreingestellten Zeitdauer den Stromkreis wieder ausschaltet.

Derartige Schaltungsanordnungen werden sowohl im gewerblichen als auch im privaten häuslichen Bereich eingesetzt, um Zugangswege, Hofeinfahrten und Haustürbereiche sowie alle Bereiche und Räumlichkeiten zu beleuchten, die beleuchtbar sein sollen, wenn eine Person sich dort befindet. Die hierfür benutzten Bewegungsmelder sind häufig unmittelbar in eine entsprechende Beleuchtungseinheit integriert, welche unmittelbar vom Bewegungsmelder ereignisabhängig angesteuert wird.

Allerdings ist hiermit ein gewisser Nachteil in Kauf zu nehmen, da die Einschaltdauer solcher von einem Bewegungsmelder angesteuerten Beleuchtungsschaltkreise zeitlich begrenzt ist.

Ein weiterer Nachteil, der sich beim Einsatz der bekannten Bewegungsmelder einstellen kann, besteht darin, daß gegebenenfalls für die Gebäudeaußenbeleuchtung, Hof-, Haustür- und Gartenbeleuchtung sowie die Beleuchtung von Gehwegen und Zufahrten einerseits eine Dauerbeleuchtung mit relativ geringer Leistung gewünscht wird, während gleichzeitig sichergestellt sein soll, daß bedarfsweise, z. B. wenn fremde Personen sich unerlaubt Zutritt verschaffen, das zu erfassende Terrain mit intensiver Beleuchtung ausgeleuchtet werden soll, um so einerseits auf die jeweilige Störung aufmerksam zu werden und zum anderen den Grund der Störung leichter ermitteln zu können. Bislang sind für solche Anwendungsfälle zwei getrennte Geräte erforderlich.

Ausgehend von diesem Stand der Technik ist es daher Aufgabe der Erfindung eine Sicherheitsbeleuchtung der eingangs genannten Art zu schaffen, mit welcher einerseits eine permanente Gebäudeaußenbeleuchtung mit geringer Leistung und andererseits eine Signalbeleuchtung mit hoher Leistung innerhalb eines Beleuchtungskreises verwirklicht ist.

Diese Aufgabe wird erfindungsgemäß durch die kennzeichnenden Merkmale des Patentanspruchs 1 gelöst.

Danach ist vorgesehen, daß dem Arbeitsstromkreis des Bewegungsmelders ein Bypaß zugeordnet ist, in welchem ein Helligkeitsregler angeordnet ist. Dieser Helligkeitsregler, der ein handelsüblicher Dimmer-Baustein sein kann, ermöglicht es, den Arbeitsstrom zwischen 0 und 100% einzustellen. Hierdurch bietet er die Möglichkeit, eine den Beleuchtungserfordernissen für normale Begehung angepaßte Beleuchtungsstärke voreinzustellen und durch Aktivierung des hierzu parallel geschalteten Bewegungsmelders die volle Beleuchtungsleistung der installierten Leuchten abzurufen.

Der Vorteil dieser Anordnung besteht insbesondere darin, daß zusätzliche Leuchten für weitere mit Bewegungsmeldern und dergleichen ausgerüstete Schaltkreise eingespart werden können. Ferner ermöglicht die Erfindung die leichte Umrüstung bereits installierter Außenbeleuchtungen, die von Bewegungsmeldern angesteuert werden, ohne daß auf die bedarfsweise erwünschte permanente Außenbeleuchtung verzichtet werden muß. Ein letzter aber nicht weniger bedeutsamer Vorteil ist in einer zusätzlichen Abschreckwirkung zu sehen, die das Umschalten auf volle Beleuchtungsstärke hervorruft, da in diesen Vorgang zunächst die Anwesenheit einer Bedienperson vermutet wird, welche offenbar das Gelände überwacht.

Gemäß einer vorteilhaften Ausführungsform der Erfindung ist ferner vorgesehen, daß im Beleuchtungsschaltkreis ein Helligkeitssensor angeordnet ist, der abhängig von der Umgebungshelligkeit den Arbeitsstrom für die Leuchten zu- bzw. abschaltet. Hierdurch ist gewährleistet, daß eine Beleuchtung nur bei entsprechender Dunkelheit erfolgt, was zu einem sparsamen Energieverbrauch führt. Entsprechend einer bevorzugten Ausgestaltung der Erfindung ist hierbei der Helligkeitssensor mit dem Helligkeitsregler und dem hierzu parallel geschalteten Bewegungsmelder in Reihe geschaltet ist.

Diese und weitere vorteilhafte Ausgestaltung der Erfindung sind Gegenstand der Unteransprüche.

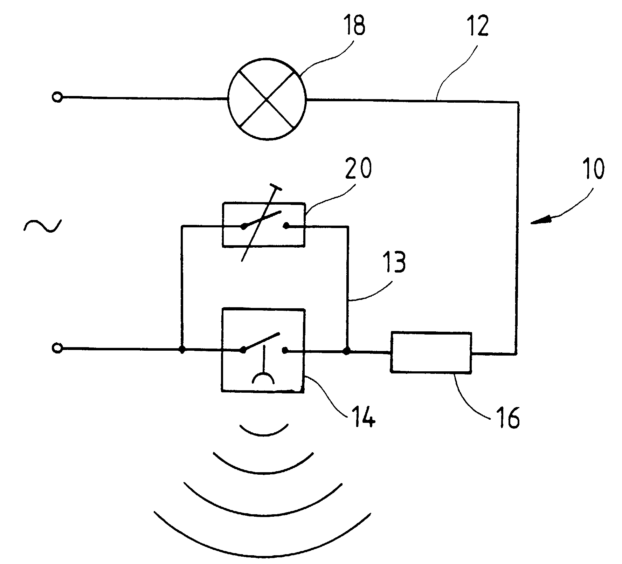

Anhand einer in der Zeichnung dargestellten Prinzipschaltskizze sollen die Erfindung und ihre vorteilhaften Ausgestaltungen sowie ihre Vorteile näher erläutert und beschrieben werden.

Es zeigt
die einzige Figur eine Prinzipschaltskizze.

In der einzigen Figur ist in schematischer Darstellung eine Schaltungsanordnung 10 mit einer Leitung 12 gezeigt, die mit dem Arbeitsstromkreis eines Bewegungsmelders 14 verbunden ist. Der Bewegungsmelder 14 ist vorzugsweise als infrarot-sensitiver Bewegungsmelder ausgebildet. Es ist aber auch möglich, daß er stattdessen als Aktiv/Passiv-Bauteil mit einem Ultraschall-Sender-Empfänger ausgerüstet ist, welcher auf einen integrierten Schalter zur Einschaltung des Arbeitsstromkreises wirkt, versehen ist. Dieser Bewegungsmelder 14 ist in Reihe geschaltet mit einem Helligkeitssensor 16 sowie mit einer Lampe 18. Die Lampe 18 steht hier symbolisch für eine dem Schaltvermögen des Bewegungsmelders 14 und des Helligkeitssensors 16 entsprechenden Anzahl von Einzelleuchten.

Ferner ist ein Helligkeitsregler 20 in die Schaltung 10 integriert. Der Helligkeitsregler 20 ist hierbei in einer Bypaßleitung 13 parallel zum Bewegungsmelder 14 geschaltet und dient dazu, einen voreinstellbaren Dauerstrom zu ermöglichen.

Die Funktionsweise dieser Schaltungsanordnung 10 wird nun beschrieben. Bei dem mit einem hier nicht näher dargestellten Versorgungsnetz verbundenen Stromkreis 10 fließt über den Beipaß 13 und den darin angeordneten Helligkeitsregler 20 entsprechend dessen Voreinstellung ein Dauerstrom, sofern der Helligkeitssensor 16 auf Durchfluß geschaltet ist, was bekannterweise von der Umgebungshelligkeit abhängt. Hierdurch wird die Lampe 18 gespeist, welcher zur Beleuchtung eines bestimmten Bereichs dient, der üblicherweise mit dem vom Bewegungsmelder 14 erfaßten Bereich übereinstimmt. Die auf diese Weise voreingestellte Beleuchtungsstärke ermöglicht prinzipiell das sichere Begehen des beleuchteten Bereiches. Gelangt nun eine Person in den Erfassungsbereich des Bewegungsmelders 14, so wird dieser aktiviert und schaltet bestimmungsgemäß seinen Arbeitsstromkreis ein, so daß nunmehr der Strom in voller Stärke fließen kann. Hierdurch wird die maximale Helligkeit der Lampe 18 gewährleistet.

## Patentansprüche

1. Sicherheitsbeleuchtung mit einem Bewegungsmelder, dessen Arbeitsstrom einen Beleuchtungsschaltkreis (10) mit Leuchten (18) speist, dadurch gekennzeichnet, daß dem Arbeitsstromkreis des Bewegungsmelders (14) ein Bypaß (13) zugeordnet ist, in welchem ein Helligkeitsregler (20) angeordnet ist.

2. Sicherheitsbeleuchtung nach Anspruch, dadurch gekennzeichnet, daß der Helligkeitsregler (29) voreinstellbar ist, auf einen bestimmten Helligkeitswert der Leuchten (18).

3. Sicherheitsbeleuchtung nach Anspruch 1 oder 2, dadurch gekennzeichnet, daß im Beleuchtungsschaltkreis (10) ein Helligkeitssensor (16) angeordnet ist, der abhängig von der Umgebungshelligkeit den Strom zu den Leuchten (18) freigibt.

4. Sicherheitsbeleuchtung nach einem der vorherigen Ansprüche, dadurch gekennzeichnet, daß der Helligkeitsregler (20) und der Bewegungsmelder (14) parallel zueinander und jeweils mit dem Helligkeitssensor (16) in Reihe geschaltet sind.

5. Sicherheitsbeleuchtung nach einem der vorherigen Ansprüche, dadurch gekennzeichnet, daß der Helligkeitsregler als elektronischer Dimmer ausgestaltet ist.

## Claims

1. Security lighting having a movement sensor whose operating current feeds a lighting circuit (10) having lights (18), characterized in that a bypass (13) in which a brightness controller (20) is arranged is assigned to the operating circuit of the movement detector (14).

2. Security lighting according to Claim 1, characterized in that the brightness controller (20) can be preset to a specific brightness of the lights (18).

3. Security lighting according to Claim 1 or 2, characterized in that a brightness sensor (16) which releases the power to the lights (18) as a function of the ambient brightness is arranged in the lighting circuit (10).

4. Security lighting according to one of the preceding claims, characterized in that the brightness controller (20) and the movement detector (14) are connected in parallel with each other and in each case in series with the brightness sensor (16).

5. Security lighting according to one of the preceding claims, characterized in that the brightness controller is configured as an electronic dimmer.

## Revendications

1. Eclairage de sécurité comportant un moyen de signalisation de mouvement dont le courant de travail alimente un circuit de commutation d'éclairage (10) comportant des lampes (18), *caractérisé en ce qu*'au circuit de courant de travail du moyen de signalisation de mouvement (14) est associé un bipasse (13) dans lequel est agencé un moyen de réglage de luminosité (20).

2. Eclairage de sécurité suivant la revendication 1, caractérisé en ce que le moyen de réglage de luminosité (20) peut être réglé au préalable sur une valeur de luminosité déterminée des lampes (18).

3. Eclairage de sécurité suivant la revendication 1 ou 2, caractérisé en ce que dans le circuit de commutation d'éclairage (10) est agencé un capteur de luminosité (16) qui libère le courant vers les lampes (18) en fonction de la luminosité environnante.

4. Eclairage de sécurité suivant l'une des revendications précédentes, caractérisé en ce que le moyen de réglage de luminosité (20) et le moyen de signalisation de mouvement (14) sont branchés en parallèle l'un par rapport à l'autre et respectivement en série avec le capteur de luminosité (16).

5. Eclairage de sécurité suivant l'une des revendications précédentes, caractérisé en ce que le moyen de réglage de luminosité est réalisé sous la forme d'un atténuateur électronique de lumière.
